# EUROPEAN PATENT APPLICATION

(11) **EP 1 681 651 A1**
(43) Date of publication of application: **19.07.2006**
(21) Application number: 04293099.0
(22) Date of filing: 22.12.2004
(51) Int. Cl.: G06Q 10/00

(54) **Virtual calendar**

(71) Applicant: SAP AG, 69190 Walldorf (DE)
(72) Inventor: Hebert, Cedric R., 06370 Mouans-Sartoux (FR); Gomez, Laurent Y., 06110 Le Cannet (FR); Ulmer, Cedric S., 06000 Nice (FR); Spadone, Pascal T., 06600 Antibes (FR)
(74) Representative: Müller-Boré & Partner Patentanwälte

(57) **Abstract**

An electronic mail system identifies autoreply messages and stores the date of return in a virtual calendar. The system then uses the virtual calendar for several features. A user can attempt to access the calendar of another user, and if that user's calendar is not accessible, then information from the virtual calendar is displayed. Also, when a user is sending a message, the virtual calendar is checked to see if a message recipient is out of the office. In another embodiment, the virtual calendar is accessed when a user creates a meeting request to determine if any meeting attendees will be out of the office at the time of the scheduled meeting. The system also has the ability to remind users of the date that a person returns to the office, and to delete entries from the virtual calendar at the appropriate time.

## Description

### Technical Field

The present application relates to electronic mail systems, and in one example embodiment, the manner in which electronic mail systems process autoreply messages.

### Background

Electronic mail (email) systems provide a plethora of features. One feature on many email systems is an out of office autoreply. In general, an autoreply allows a user to set up his email inbox so that when he is out of the office for an extended period of time, the system automatically replies to all email messages sent to his mailbox. Such an autoreply message normally states that the user is out of the office and when he is expected to return. The system can be programmed so that an out of office autoreply is sent for each message received, or it can be programmed so that only one autoreply message is sent for each email address from which it receives an email message. One advantage of sending it only once per email address is that such a setup avoids "auto-bouncing" of replies, in which two email addresses that are registered on the same mailing list are set up for autoreply, thereby causing the two addresses to continually autoreply to each other. To avoid this bouncing problem, most email systems are set up so that only one autoreply is transmitted per email address. However, while setting up the email system on a per email address basis avoids the problem of bouncing, the information in the autoreply message such as the return date is often lost when the person is out of the office for an extended period of time.

### Summary of Embodiments

In an embodiment of the invention, an electronic mail system identifies autoreply messages that it receives. The email system then extracts the date information from that autoreply message (e.g., the date that the user who generated that autoreply is expected to return to the office), and stores it in a local database. This local database is referred to as a virtual calendar. The email system further has the ability to periodically scan the virtual calendar, and remove any entries that are no longer current (because, for example, the person has returned to the office).

Once the virtual calendar has been created, the exemplary email system uses the virtual calendar to implement several features. In one example embodiment, a user may attempt to access the actual calendar of a second user, and if that second user's calendar is not available, information from the virtual calendar is displayed instead. In another embodiment, the email system checks the virtual calendar before messages are sent out to determine if any of the message recipients are out of the office. If any recipient is out of the office, the sender of the message is given the opportunity to delete that user from the recipient list. In another example embodiment, this ability to delete a person who is out of the office from the recipient list is combined with an email system's address autocompletion feature. In another embodiment, when a user creates a meeting request with the email system, the system checks the virtual calendar to determine if any of the meeting attendees will be out of the office.

### Brief Description of the Drawings

Figure 1 illustrates a system diagram of an example embodiment of the invention.

Figure 2 is a flowchart illustrating an example embodiment of the invention in which an entry is made to a virtual calendar.

Figure 3 is a flowchart illustrating an example embodiment of the invention in which an entry is deleted from a virtual calendar.

Figure 4 is a flowchart illustrating an example embodiment of the invention in which a virtual calendar is synchronized with a user's calendar.

Figure 5 is a flowchart illustrating an example embodiment of the invention in which addressees in an email message are checked in a virtual calendar.

Figure 6 is a flowchart illustrating an example embodiment of the invention in which a virtual calendar is checked during the creation of a meeting request.

Figure 7 illustrates a computer system upon which an example embodiment of the invention may operate.

Figure 8 illustrates another computer system upon which an example embodiment of the invention may operate.

Figure 9 illustrates a data base and file structure that may be used in connection with the computer system of Figure 8.

### Detailed Description

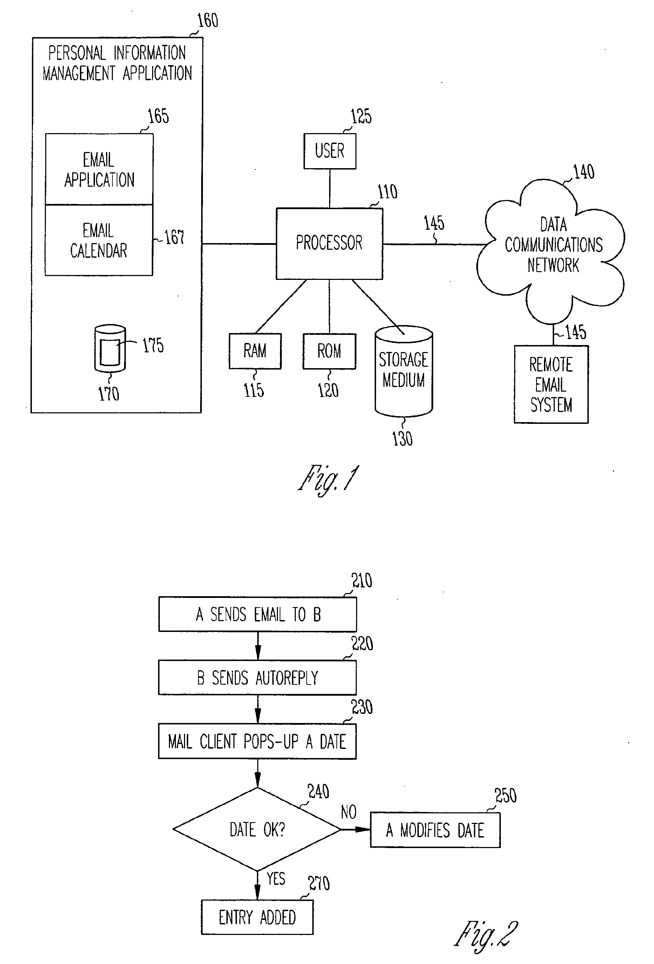

An email system, according to an example embodiment of the present invention, is illustrated in Figure 1. The email system of Figure 1 runs on a processor 110 which fetches instructions from random access memory 115 and/or read only memory 120. The email system also has a storage medium 130 in which the data of a user 125 is stored. This data may include messages received by the user, documents that were attached to incoming email messages, address books, etc. Users on the email system can send messages and data to users of other systems over communication lines 145, and through a data communications network 140, such as the internet. Users can also send messages to other users who reside on the same email system.

Figure 1 further illustrates a calendar database 170 to store virtual calendar information, which is accessed and maintained by a virtual calendar application to provide a virtual calendar 175, according to one example embodiment of the present invention. In one example embodiment, the virtual calendar application is a component of a personal information management (PIM) application 160 that also includes an e-mail application or system 165 with its own email calendar system 167. In another embodiment, the virtual calendar application may be a standalone or server-based dedicated calendaring application. The calendar database 170 can be an isolated physical data base, part of another database such as the database 130 that stores a user's messages, and/or the database can be loaded into random access memory for ease of access while the email system is up and running. Figure 1 illustrates one example embodiment of an architecture of an email system with a calendar data base. Those of skill in the art will realize that there are other ways to structure such a database for an email system.

The virtual calendar 175 is created from incoming autoreply messages, and, once created, the virtual calendar 175 may be used by the email system in several ways, according to various example embodiments of the present invention. The virtual calendar 175 can be used in connection with the email system for calendar synchronization, for notifying a sender of an email message that one or more recipients of his message are out of the office, and for identifying an out of office person in connection with the creation of a meeting request. The email system of Figure 1 also has the ability to delete entries in the virtual calendar at the appropriate times.

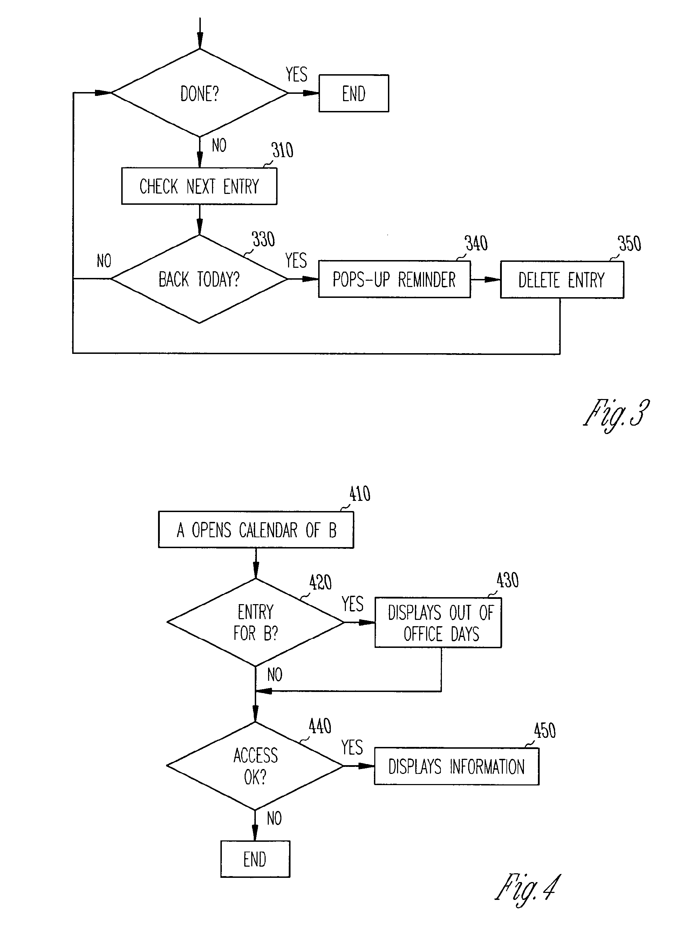

More specifically, an example embodiment of the invention creates an entry in the virtual calendar 175 (e.g., as part of the virtual calendar information) in the following manner. Referring to Figure 2, the creation occurs when a first user sends an email message to a second user (210) who is out of the office and who has enabled an autoreply feature on his email server (220). The autoreply message sent back to the first user contains information that includes the second user's date of return. The email system of the first user recognizes the autoreply, and its email system opens up a popup window (230) with a proposed date of return for the second user (240). In an example embodiment, this proposed date of return is extracted from the second user's autoreply. The first user either accepts the return date as proposed by the system, or inputs a different date (250). The email system of the first user then adds this data locally to its system in the virtual calendar 175 implemented utilizing the calendar database 170 (270). The virtual calendar 175 is now available for functions such as calendar synchronization, notifying a sender of an email message that one or more recipients of his message are out of the office, and for identifying an out of office person during the creation of a meeting request.

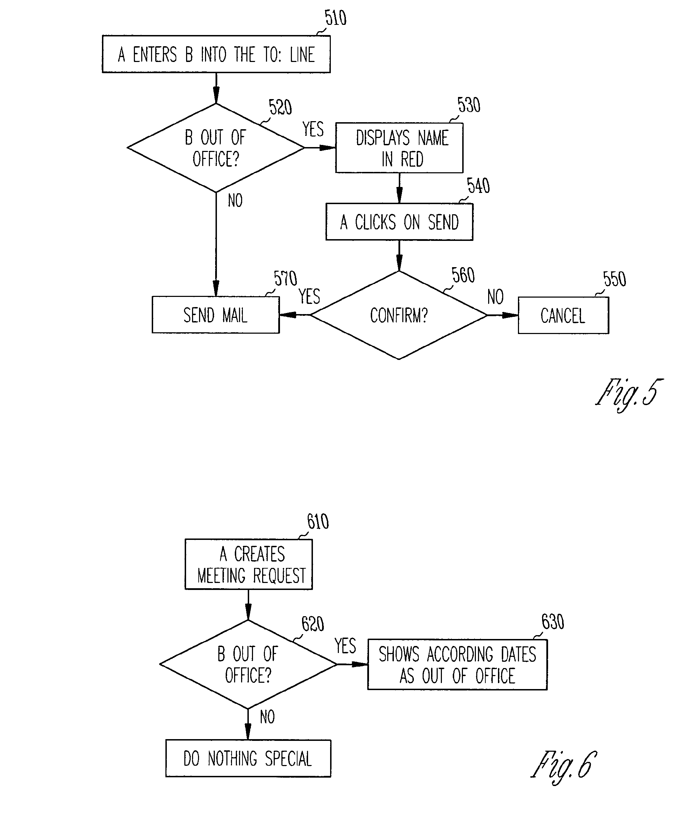

In an example embodiment of the invention, the virtual calendar 175 in the calendar database 170 is scanned on a periodic basis and entries are deleted at the appropriate time. In one example embodiment, the periodic scanning is performed on a daily basis. There are at least two ways in which this feature of the invention can be implemented. First, referring to Figure 3, the calendar database 170 can be sequentially scanned (310), and if the current date is the same as the date of return in a calendar record (330), that record is deleted from the calendar database (350). In one example embodiment, the user of the email system is reminded that the user from whom he originally received the autoreply message is scheduled to be back in the office (340), while in another embodiment no notification is provided. In another embodiment, the date of return is a key into the database, and a read of that database using that key retrieves all the records with that particular date. These records can then be processed, and the users who sent messages that triggered the autoreply messages can be notified of the other user's return.

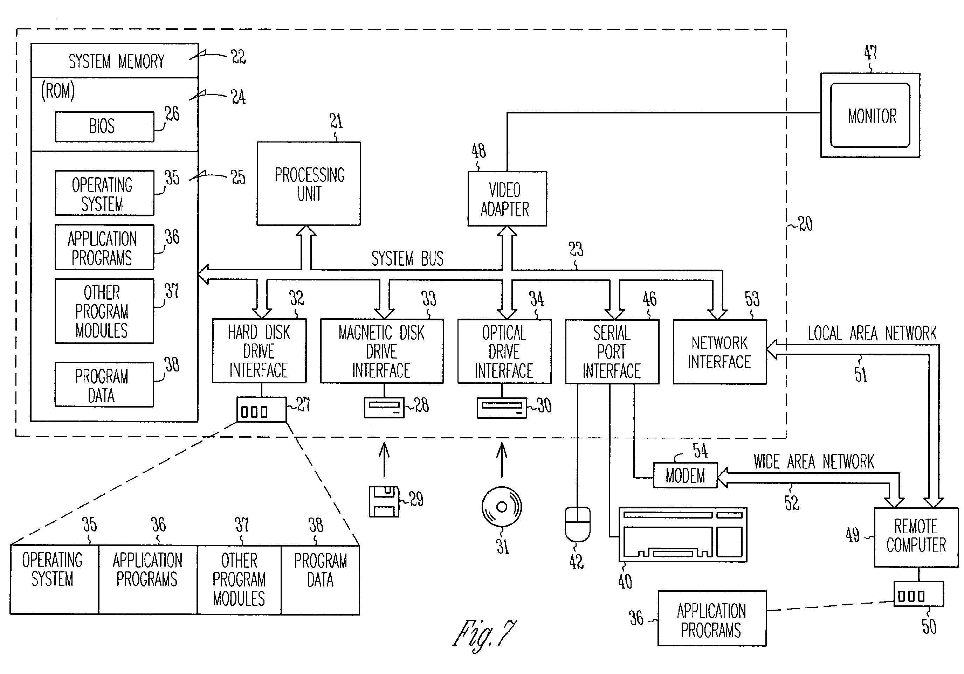

In an example embodiment of the invention illustrated in Figure 4, a user who receives an autoreply and for whom a virtual calendar 175 is created, is able to synchronize his virtual calendar 175 with that of an actual calendar 410 (e.g., actual calendar information) associated with the user who set up the autoreply. If the actual calendar is available, a user opens up the actual calendar (410), and if there is an entry (420), the information about that user's absence from the office is displayed (430). In one example embodiment, the days in which the sender is out of the office are displayed in a different color than the other days on the calendar, thereby clearly communicating that information to the receiver. In another embodiment, if detailed information in a user's calendar is available (440), then the detailed information from the user's calendar is displayed (450). If none of this information is available or accessible, then information from the virtual calendar 175 is displayed.

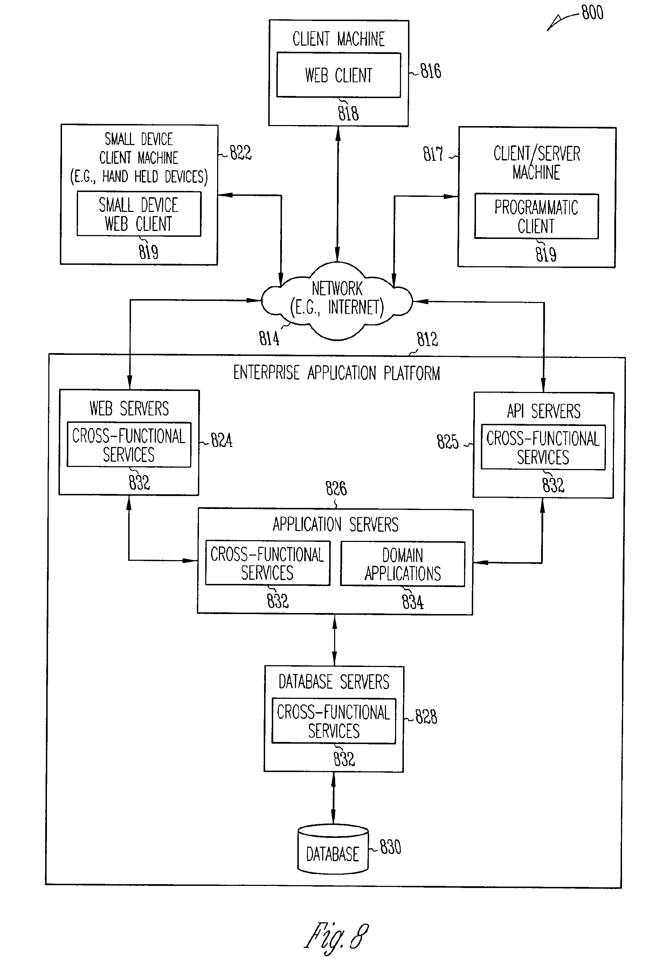

In an example embodiment illustrated in Figure 5, an email system uses the virtual calendar 175 to report to a first user that an addressee of his email message is out of the office. Specifically, when a user creates a message that includes as a recipient a person who is out of office (510, 520), that recipient's name is highlighted on the screen (530), and then when the user clicks on send (540), the user is asked if he would like to send the message to the person who is out of the office (560). The user can either decide to delete that recipient from the message (550), or the user can decide to send it to the recipient notwithstanding his absence from the office (570). In another embodiment, this feature is combined with an email address autocompletion feature, so that when the email system recognizes the recipient before the user finishes typing the recipient's email address, the system supplies the recipient's full email address, and executes the process of Figure 5 to determine if that recipient is out of the office.

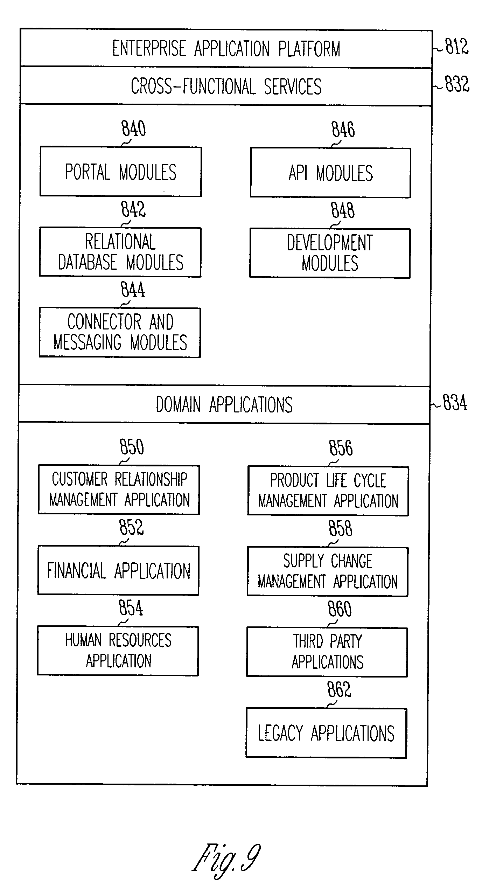

In an embodiment, illustrated in Figure 6, when a person uses an email system to create a meeting request (610), the system checks the virtual calendar 175 to see if a potential meeting attendee is out of the office (620). If a recipient is out of the office, the system shows the dates that the potential attendee is out of the office (630), and the meeting organizer can determine what to do. For example, the meeting organizer could decided to go on with the meeting as planned without the presence of a particular attendee(s), or the organizer could at that point, before the meeting notice is sent out, change the planned meeting date to a date which the attendee(s) is expected to be back in the office.

Figure 7 is an overview diagram of a hardware and operating environment in conjunction with which embodiments of the invention may be practiced. The description of Figure 7 is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types.

Moreover, those skilled in the art will appreciate that the invention may be practiced with other computer system configurations, including hand-held devices, multiprocessor systems, microprocessor-based or programmable consumer electronics, network PCS, minicomputers, mainframe computers, and the like. The invention may also be practiced in distributed computer environments where tasks are performed by I/ 0 remote processing devices that are linked through a communications network. In a distributed computing environment, program modules may be located in both local and remote memory storage devices.

In the embodiment shown in Figure 7, a hardware and operating environment is provided that is applicable to any of the servers and/or remote clients shown in the other Figures.

As shown in Figure 7, one example embodiment of the hardware and operating environment includes a general purpose computing device in the form of a computer 20 (e.g., a personal computer, workstation, or server), including one or more processing units 21, a system memory 22, and a system bus 23 that operatively couples various system components including the system memory 22 to the processing unit 21. There may be only one or there may be more than one processing unit 21, such that the processor of computer 20 comprises a single central-processing unit (CPU), or a plurality of processing units, commonly referred to as a multiprocessor or parallel-processor environment. In various embodiments, computer 20 is a conventional computer, a distributed computer, or any other type of computer.

The system bus 23 can be any of several types of bus structures including a memory bus or memory controller, a peripheral bus, and a local bus using any of a variety of bus architectures. The system memory can also be referred to as simply the memory, and, in some embodiments, includes read-only memory (ROM) 24 and random-access memory (RAM) 25. A basic input/output system (BIOS) program 26, containing the basic routines that help to transfer information between elements within the computer 20, such as during start-up, may be stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 couple with a hard disk drive interface 32, a magnetic disk drive interface 33, and an optical disk drive interface 34, respectively. The drives and their associated computer-readable media provide non volatile storage of computer-readable instructions, data structures, program modules and other data for the computer 20. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (e.g., RAID storage devices) and the like, can be used in the exemplary operating environment.

A plurality of program modules can be stored on the hard disk, magnetic disk 29, optical disk 31, ROM 24, or RAM 25, including an operating system 35, one or more application programs 36, other program modules 37, and program data 38. For instance, in the example embodiment illustrated in Figure 1, the Personal Information Management application 160, with its email application 165 and its email calendar 167, and the calendar database 170 and its virtual calendar 175, could all be stored on the hard disk 29, optical disk 31, ROM 24, and/or RAM 25. A plug in containing a security transmission engine for the present invention can be resident on any one or number of these computer-readable media.

A user may enter commands and information into computer 20 through input devices such as a keyboard 40 and pointing device 42. Other input devices (not shown) can include a microphone, joystick, game pad, satellite dish, scanner, or the like. These other input devices are often connected to the processing unit 21 through a serial port interface 46 that is coupled to the system bus 23, but can be connected by other interfaces, such as a parallel port, game port, or a universal serial bus (USB). A monitor 47 or other type of display device can also be connected to the system bus 23 via an interface, such as a video adapter 48. The monitor 40 can display a graphical user interface for the user. In addition to the monitor 40, computers typically include other peripheral output devices (not shown), such as speakers and printers.

The computer 20 may operate in a networked environment using logical connections to one or more remote computers or servers, such as remote computer 49. These logical connections are achieved by a communication device coupled to or a part of the computer 20; the invention is not limited to a particular type of communications device. The remote computer 49 can be another computer, a server, a router, a network PC, a client, a peer device or other common network node, and typically includes many or all of the elements described above I/0 relative to the computer 20, although only a memory storage device 50 has been illustrated. The logical connections depicted in Figure 7 include a local area network (LAN) 51 and/or a wide area network (WAN) 52. Such networking environments are commonplace in office networks, enterprise-wide computer networks, intranets and the internet, which are all types of networks.

When used in a LAN-networking environment, the computer 20 is connected to the LAN 51 through a network interface or adapter 53, which is one type of communications device. In some embodiments, when used in a WAN-networking environment, the computer 20 typically includes a modem 54 (another type of communications device) or any other type of communications device, e.g., a wireless transceiver, for establishing communications over the wide-area network 52, such as the internet. The modem 54, which may be internal or external, is connected to the system bus 23 via the serial port interface 46. In a networked environment, program modules depicted relative to the computer 20 can be stored in the remote memory storage device 50 of remote computer, or server 49. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

Figure 8 illustrates another example of a network system 800, having a client server architecture, that an exemplary embodiment disclosed herein can operate on and in connection with. A platform (e.g., machines and software), in the exemplary form of an enterprise application platform 812, provides server-side functionality, via a network 814 (*e*.*g*., the Internet) to one or more clients. Figure 8 illustrates, for example, a client machine 816 with web client 818 (*e*.*g*., a browser, such as the INTERNET EXPLORER browser developed by Microsoft Corporation of Redmond, Washington State), a small device client machine 822 with a small device web client 819 (e.g., a browser without a script engine) and a client/server machine 817 with a programmatic client 819.

Turning specifically to the enterprise application platform 812, web servers 824, and Application Program Interface (API) servers 825 are coupled to, and provide web and programmatic interfaces to, application servers 826. The application servers 826 are, in turn, shown to be coupled to one or more databases servers 828 that facilitate access to one or more databases 830. The web servers 824, Application Program Interface (API) servers 825, application servers 826, and database servers 828 host cross-functional services 832. The application servers 826 further host domain applications 834.

The cross-functional services 832 provide services to users and processes that utilize the information enterprise application platform 812. For instance, the cross-functional services 832 provide portal services (e.g., web services), database services and connectivity to the domain applications 834 for users that operate the client machine 816, the client/server machine 817 and the small device client machine 822. In addition, the cross-functional services 832 provide an environment for delivering enhancements to existing applications and for integrating third party and legacy applications with existing cross-functional services 832 and domain applications 834. Further, while the system 800 shown in Figure 8 employs a client-server architecture, the present invention is of course not limited to such an architecture, and could equally well find application in a distributed, or peer-to-peer, architecture system.

Figure 9 is a block diagram illustrating enterprise applications and services as embodied in the enterprise application platform 812, within which an exemplary embodiment of the present invention may be deployed. The enterprise application platform 812 includes cross-functional services 832 and domain applications 834. The cross-functional services 832 include portal modules 840, relational database modules 842, connector and messaging modules 844, Application Program Interface (API) modules 846, and development modules 848.

The portal modules 840 enable a single point of access to other cross-functional services 832 and domain applications 834 for the client machine 816, the small device client machine 822 and the client/server machine 817. The portal modules 840 are utilized to process, author and maintain web pages that present content (e.g., user interface elements and navigational controls) to the user. In addition, the portal modules 840 enable user roles, a construct that associates a role with a specialized environment that is utilized by a user to execute tasks, utilize services and exchange information with other users and within a defined scope. For example, the role determines the content that is available to the user and the activities that the user may perform. The portal modules 840 include a generation module, a communication module, a receiving module and a regenerating module. In addition, the portal modules 840 comply with web services standards and/or utilize a variety of Internet technologies including Java, J2EE, SAP's Advanced Business Application Programming Language (ABAP) and Web Dynpro, XML, JCA, JAAS, X.509, LDAP, WSDL, WSRR, SOAP, UDDI and Microsoft.NET.

The relational database modules 842 provide support services for access to the database 830 that includes a user interface library. The relational database modules 842 provide support for object relational mapping, database independence and distributed computing. The relational database modules 842 are utilized to add, delete, update and manage database elements. In addition, the relational database modules 842 comply with database standards and/or utilize a variety of database technologies including SQL, SQLDBC, Oracle, MySQL, Unicode, JDBC.

The connector and messaging modules 844 enable communication across different types of messaging systems that are utilized by the cross-functional services 832 and the domain applications 834 by providing a common messaging application processing interface. The connector and messaging modules 844 enable asynchronous communication on the enterprise application platform 812.

The Application Platform Interface (API) modules 846 enable the development of service-based applications by exposing an interface to existing and new applications as services. Repositories are included in the platform as a central place to find available services when building applications.

The development modules 848 provide a development environment for the addition, integration, updating and extension of software components on the enterprise application platform 812 without impacting existing cross-functional services 832 and domain applications 834.

Turning to the domain applications 834, the customer relationship management applications 850 enable access to and facilitates collecting and storing of relevant personalized information from multiple data sources and business processes. Enterprise personnel that are tasked with developing a buyer into a long-term customer may utilize the customer relationship management applications 850 to provide assistance to the buyer throughout a customer engagement cycle.

Enterprise personnel may utilize the financial applications 852 and business processes to track and control financial transactions within the enterprise application platform 812. The financial applications 852 facilitate the execution of operational, analytical and collaborative tasks that are associated with financial management. Specifically, the financial applications 852 enable the performance of tasks related to financial accountability, planning forecasting, and managing the cost of finance.

The human resource applications 854 may be utilized by enterprise personal and business processes to manage, deploy, and track enterprise personnel. Specifically, the human resource applications 854 enable the analysis of human resource issues and facilitate human resource decisions based on real time information.

The product life cycle management applications 856 enable the management of a product throughout the life cycle of the product. For example, the product life cycle management applications 856 enable collaborative engineering, custom product development, project management, asset management and quality management among business partners.

The supply chain management applications 858 enable monitoring of performances that are observed in supply chains. The supply chain management applications 858 facilitate adherence to production plans and on-time delivery of products and services.

The third party applications 860, as well as legacy applications 862, may be integrated with domain applications 834 and utilize cross-functional services 832 on the enterprise application platform 812.

In the foregoing detailed description of embodiments of the invention, various features are grouped together in a single embodiment for the purpose of streamlining the disclosure. This method of disclosure is not to be interpreted as reflecting an intention that the claimed embodiments of the invention require more features than are expressly recited in each claim. Rather, as the following claims reflect, inventive subject matter lies in less than all features of a single disclosed embodiment. Thus the following claims are hereby incorporated into the detailed description of embodiments of the invention, with each claim standing on its own as a separate embodiment. It is understood that the above description is intended to be illustrative, and not restrictive. It is intended to cover all alternatives, modifications and equivalents as may be included within the spirit and scope of the invention as defined in the appended claims. Many other embodiments will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein," respectively. Moreover, the terms "first," "second," and "third," etc., are used merely as labels, and are not intended to impose numerical requirements on their objects.

## Claims

1. An electronic mail system including:
a processor;
a database of stored messages and virtual calendar information;
wherein the processor is to executed instructions to recognize incoming autoreply messages, to extract date information from the incoming autoreply messages, and to store the date information within the virtual calendar information.

2. The electronic mail system of claim 1, wherein the processor is further to execute instructions to display the date information from the autoreply message.

3. The electronic mail system of claim 2, wherein the processor is further to execute instructions to allow a change in the date information prior to storing the date information within the virtual calendar information.

4. The electronic mail system of claim 1, wherein the processor is further to execute instructions to read records in the virtual calendar information, to determine if the date information in a record is the current date, to display the date information, and to delete the date information from the virtual calendar information.

5. The electronic mail system of claim 1, wherein the processor is further to execute instructions to open a calendar database, to display calendar information from that calendar database, and to identify days that a person is out of the office.

6. The electronic mail system of claim 5, wherein the calendar database is not accessible, and information about the days that the person is out of the office is retrieved from the virtual calendar.

7. The electronic mail system of claim 1, wherein upon the sending of a message by a first user, the processor is to execute instructions to check the virtual calendar information before the message is sent to a second user, to determine if the second user is out of the office, to inform the first user that the second user is out of the office, and to request confirmation from the first user that the first user would like to send the message to the second user.

8. The electronic mail system of claim 7, wherein the instructions executed by the processor that inform the first user that the second user is out of the office include a feature of highlighting the second user's email id.

9. The electronic mail system of claim 1, wherein the processor is for the executed out instructions to create meeting requests, to access the virtual calendar information, and to identify days that a potential meeting attendee is out of the office.

10. The electronic mail system of claim 1, wherein the virtual calendar information is associated with a virtual calendar application.

11. A method including:
receiving an autoreply message in an electronic mail system;
identifying the autoreply message; and
automatically storing information from the autoreply message in a virtual calendar.

12. The method of claim 11, wherein the information stored is date information.

13. The method of claim 11, further including:
examining the virtual calendar; and
deleting information from the virtual calendar.

14. The method of claim 13, wherein the information deleted from the virtual calendar is a current date, and further wherein the examining and the deleting is performed on a periodic basis.

15. The method of claim 11, further including:
composing an electronic mail message;
accessing the virtual calendar to determine if a recipient of the electronic mail message is out of the office; and
providing an option to delete the recipient from the electronic mail message.

16. The method of claim 15, wherein the accessing of the virtual calendar to determine if a recipient of the electronic mail message is out of the office is performed in connection with an autocompletion feature of the electronic mail system.

17. The method of claim 11, further including:
creating a meeting request using the electronic mail system;
accessing the virtual calendar to determine if a meeting attendee is out of the office; and
providing options including:
continuing to create the meeting request without change; and
altering the date of the requested meeting.

18. The method of claim 11, further including:
providing for a first user to access the calendar database of a second user;
determining whether the first user has access to the second user's database; and
displaying information from the second user's database.

19. The method of claim 18, further including:
displaying information from the virtual calendar if the first user cannot access the database of the second user.

20. A machine readable medium including instructions to cause a machine to perform a process including:
receiving an autoreply message in an electronic mail system;
identifying the autoreply message; and
storing information from the autoreply message in a virtual calendar.

21. The machine readable medium of claim 20, wherein the information stored is a date.

22. The machine readable medium of claim 20, further including instructions for:
accessing the virtual calendar; and
deleting information from the virtual calendar.

23. The machine readable medium of claim 22, wherein the information deleted from the virtual calendar is the current date, and further wherein the accessing and the deleting is performed on a periodic basis.

24. The machine readable medium of claim 20, further including instructions for:
composing an electronic mail message;
accessing of the virtual calendar to determine if a recipient of the electronic mail message is out of the office; and
providing an option to delete the recipient from the electronic mail message.

25. The machine readable medium of claim 24, wherein the accessing a of the virtual calendar to determine if a recipient of the electronic mail message is out of the office is performed in connection with an autocompletion feature of the electronic mail system.

26. The machine readable medium of claim 20, further including instructions for:
creating a meeting request using the electronic mail system;
accessing the virtual calendar to determine if a meeting attendee is out of the office; and
providing options including:
continuing to create the meeting request without change; and
altering the date of the requested meeting.

27. The machine readable medium of claim 20, further including instructions for:
providing for a first user to access the calendar database of a second user;
determining whether the first user has access to the second user's database; and
displaying information from the second user's database.

28. The machine readable medium of claim 27, further including instructions for:
displaying information from the virtual calendar if the first user cannot access the database of the second user.

29. A database for an electronic mail system including a virtual calendar, the virtual calendar including date information regarding when a person will return from an absence, the date information in the virtual calendar originating from an autoreply message received by the electronic mail system.

## Amended claims

### Amended claims in accordance with Rule 86(2) EPC.

**1.** An electronic mail System including:
a processor;
a database of stored messages and virtual calendar information;
wherein the processor is to executed instructions to recognise incoming autoreply messages, to extract date information from the incoming autoreply messages, and to store the date information within the virtual calendar information,
wherein upon the sending of a message by a first user, the processor is to execute instructions to check the virtual calendar information before the message is sent to a second user, to determine if the second user is out of the office.

**2.** The electronic mail system of claim 1, wherein the processor is further to execute instructions to display the date information from the autoreply message.

**3.** The electronic mail system of claim 2, wherein the processor is further to execute instructions to allow a change in the date information prior to storing the date information within the virtual calendar information.

**4.** The electronic mail system of claim 1, wherein the processor is further to execute instructions to read records in the virtual calendar information, to determine if the date information in a record is the current date, to display the date information, and to delete the date information from the virtual calendar information.

**5.** The electronic mail System of claim 1, wherein the processor is further to execute instructions to open a calendar database, to display calendar information from that calendar database, and to identify days that a person is out of the office.

**6.** The electronic mail system of claim 5, wherein the calendar database is not accessible, and information about the days that the person is out of the office is retrieved from the virtual calendar.

**7.** The electronic mail system of claim 1, wherein upon the sending of a message by a first user, the processor is to execute instructions to inform the first user that the second user is out of the office, and to request confirmation from the first user that the first user would like to send the message to the second user.

**8.** The electronic mail system of claim 7, wherein the instructions executed by the processor that inform the first user that the second user is out of the office include a feature of highlighting the second user's email id.

**9.** The electronic mail system of claim 1, wherein the processor is for the executed out instructions to create meeting requests, to access the virtual calendar information, and to identify days that a potential meeting attendee is out of the office.

**10.** The electronic mail system of claim 1, wherein the virtual calendar information is associated with a virtual calendar application.

**11.** A method including:
receiving an autoreply message in an electronic mail system;
identifying the autoreply message; and
automatically storing information from the autoreply message in a virtual calendar; and
accessing the virtual calendar to determine if a recipient of the electronic mail message is out of the office.

**12.** The method of claim 11, wherein the information stored is date information.

**13.** The method of claim 11, further including: examining the virtual calendar; and
deleting information from the virtual calendar,

**14.** The method of claim 13, wherein the information deleted from the virtual calendar is a current date, and further wherein the examining and the deleting is performed an a periodic basis.

**15.** The method of claim 11, further including:
providing an option to delete the recipient from the electronic mail message.

**16.** The method of claim 15, wherein the accessing of the virtual calendar to determine if a recipient of the electronic mail message is out of the office is performed in connection with an autocompletion feature of the electronic mail system.

**17.** The method of claim 11, further including:
creating a meeting request using the electronic mail System;
accessing the virtual calendar to determine if a meeting attendee is out of the office; and
providing options including:
continuing to create the meeting request without change; and altering the date of the requested meeting

**18.** The method of claim 11, further including:
providing for a first user to access the calendar database of a second user; determining whether the first user has access to the second user's database; and
displaying information from the second user's database.

**19.** The method of Claim 18, further including:
displaying information from the virtual calendar if the first user cannot access the database of the second user.

**20.** A machine readable medium including instructions to cause a machine to perform a process including:
receiving an autoreply message in an electronic mail system;
identifying the autoreply message; and
storing information from the autoreply message in a virtual calendar; and
accessing of the virtual calendar to determine if a recipient of the electronic mail message is out of the office.

**21.** The machine readable medium of claim 20, wherein the information stored is a date.

**22.** The machine readable medium of claim 20, further including instructions for: accessing the virtual calendar; and deleting information from the virtual calendar.

**23.** The machine readable medium of claim 22, wherein the information deleted from the virtual calendar is the current date, and further wherein the accessing and the deleting is performed an a periodic basis.

**24.** The machine readable medium of claim 20, further including instructions for:
providing an option to delete the recipient from the electronic mail message.

**25.** The machine readable medium of claim 24, wherein the accessing a of the virtual calendar to determine if a recipient of the electronic mail message is out of the office is performed in connection with an autocompletion feature of the electronic mail System.

**26.** The machine readable medium of claim 20, further including instructions for: creating a meeting request using the electronic mail System; accessing the virtual calendar to determine if a meeting attendee is out of the office; and
providing options including:
continuing to create the meeting request without change; and altering the date of the requested meeting.

**27.** The machine readable medium of claim 20, further including instructions for:
providing for a first user to access the calendar database of a second user;
determining whether the first user has access to the second user's database; and
displaying information from the second user's database.

**28.** The machine readable medium of claim 27, further including instructions for: displaying information from the virtual calendar if the first user cannot access the database of the second user.

**29.** A database for an electronic mail System including a virtual calendar, the virtual calendar including date information regarding when a person will return from an absence, the date information in the virtual calendar originating from an autoreply message received by the electronic mail system.
